# EUROPÄISCHE PATENTSCHRIFT

(11) **EP 3 004 592 B1**
(45) Veröffentlichungstag und Bekanntmachung des Hinweises auf die Patenterteilung: **22.05.2019**
(21) Anmeldenummer: 14727561.4
(22) Anmeldetag: 03.06.2014
(51) Int. Cl.: F02C 6/12, F02B 37/00, F02B 37/013, F02B 29/04, F04D 17/12

(54) **MEHRSTUFIGE AUFLADUNGSEINRICHTUNG IN BAUKASTENFORM**
MULTI-STAGE SUPERCHARGING DEVICE HAVING MUDULAR STRUCTURE
DISPOSITIF DE SURALIMENTATION À PLUSIEURS ÉTAGES AYANT UNE CONSTRUCTION MODULAIRE

(30) Priorität: 05.06.2013 DE 102013009428
(43) Veröffentlichungstag der Anmeldung: 13.04.2016
(73) Patentinhaber: MAN Energy Solutions SE, 86153 Augsburg (DE)
(72) Erfinder: SOENGEN, Matthias, 83156 Augsburg (DE)
(86) Internationale Anmeldenummer: PCT/EP2014/061491
(87) Internationale Veröffentlichungsnummer: WO 2014/195317

(56) Entgegenhaltungen:
- DE-A1- 2 550 054
- DE-A1-102004 027 593
- DE-A1-102005 056 797
- DE-A1-102008 032 492

## Beschreibung

Die Erfindung betrifft eine mehrstufige Aufladungseinrichtung in Baukastenform.

Bislang handelt es sich bei Aufladungseinrichtungen für Brennkraftmaschinen immer um individuell auf einen definierten Einsatzzweck und definierte Anforderungen konstruierte Aufladungseinrichtungen. Soll eine Aufladungseinrichtung neu entwickelt werden, so werden in der Regel sämtliche Baugruppen derselben einer Neuentwicklung unterzogen. Bislang ist es nicht und nur in stark eingeschränktem Umfang möglich, bei einer Neuentwicklung einer Aufladungseinrichtung auf bestehende Komponenten zuzugreifen und dieselben weiter zu nutzen. Dies ist von Nachteil.

Aus der DE 10 2005 056 797 A1 ist eine für eine definierte Anforderung konstruierte Aufladungseinrichtung bekannt, die als abgasseitige Baugruppen eine Hochdruckturbine und eine Niederdruckturbine und als ladeluftseitige Baugruppen einen Niederdruckverdichter und einen Hochdruckverdichter aufweist. Als weitere abgasseitige Baugruppe umfasst die aus diesem Stand der Technik bekannte Aufladungseinrichtung ein Abgasabströmgehäuse. Als weitere ladeluftseitige Baugruppen sind ein Schalldämpfer und ein Ladeluftkühler vorhanden. Ein Hochdruckturbinenrotor der Hochdruckturbine ist mit einem Hochdruckverdichterrotor des Hochdruckverdichters über eine erste Welle gekoppelt. Ein Niederdruckturbinenrotor der Niederdruckturbine ist mit einem Niederdruckverdichterrotor des Niederdruckverdichters über eine zweite Welle gekoppelt. Die zweite Welle, welche den Niederdruckturbinenrotor mit dem Niederdruckverdichterrotor koppelt, ist als Hohlwelle ausgeführt, die abschnittsweise konzentrisch die erste Welle umgibt, welche den Hochdruckturbinenrotor mit dem Hochdruckverdichterrotor koppelt. Die Dokumente DE 2550054 A1 und DE 102004027593 A1 zeigen weitere Beispiele mehrstufiger Aufladungseinrichtungen.

Hievon ausgehend liegt der Erfindung die Aufgabe zu Grunde, eine Aufladungseinrichtung in Baukastenbauform zu schaffen. Diese Aufgabe wird durch eine mehrstufige Aufladungseinrichtung in Baukastenform gemäß Anspruch 1 gelöst.

Die ladeluftseitigen Baukastenmodule des Baukastensystems, nämlich zumindest der Hochdruckverdichter mit dem Hochdruckverdichterrotor und dem Hochdruckverdichtergehäuse, der Niederdruckverdichter mit dem Niederdruckverdichterrotor und dem Niederdruckverdichtergehäuse, und der zwischen den Niederdruckverdichter und den Hochdruckverdichter geschaltete Ladeluftkühler sind unabhängig von der Ausgestaltung der abgasseitigen Baukastenmodule.

Als abgasseitige Baukastenmodule sind die Hochdruckturbine mit dem Hochdruckturbinenrotor und dem Hochdruckturbinengehäuse und die Niederdruckturbine mit dem Niederdruckturbinenrotor und dem Niederdruckturbinengehäuse abhängig davon, ob die Hochdruckturbine als Radialturbine oder als Axialturbine und die Niederdruckturbine als Radialturbine oder als Axialturbine ausgeführt sind. Ferner sind als abgasseitige Baukastenmodule das Hochdruckturbinengehäuse und das Niederdruckturbinengehäuse abhängig davon, ob die Aufladungseinrichtung ohne Abgasnachbehandlung oder mit Abgasnachbehandlung zwischen der Hochdruckturbine und der Niederdruckturbine ausgebildet ist.

Die erfindungsgemäße Aufladungseinrichtung in Baukastenform ermöglicht es, Berechnungs- und Versuchsergebnisse, die bei der Entwicklung einer Aufladungseinrichtung angefallen sind, auf andere Aufladungseinrichtungen zu übertragen. Für unterschiedliche Aufladungseinrichtungen können so einheitliche Baugruppenkonzepte bereitgestellt und Baugruppenvarianten über die unterschiedlichen Ausgestaltungen der Aufladungseinrichtungen reduziert werden. Ferner kann die Ersatzteilhaltung beim Kunden sowie Hersteller vereinfacht werden. Schulungsaufwände für Kunden und Servicepersonal können reduziert werden.

Insbesondere sind als abgasseitige Baukastenmodule das Hochdruckturbinengehäuse und das Niederdruckturbinengehäuse abhängig davon, ob die Aufladungseinrichtung mit einer externen Abgasnachbehandlung oder mit einer internen Abgasnachbehandlung zwischen der Hochdruckturbine und der Niederdruckturbine ausgebildet ist. Diese Ausgestaltung von Hochdruckturbinengehäuse und Niederdruckturbinengehäuse, nämlich abhängig von einer externen Abgasnachbehandlung oder internen Abgasnachbehandlung, ermöglicht die Bereitstellung eines besonders vorteilhaften Baukastensystems.

Vorzugsweise ist als weiteres ladeluftseitiges Baukastenmodul ein Schalldämpfer unabhängig von der Ausgestaltung der abgasseitigen Baukastenmodule. Ferner ist als weiteres Baukastenmodul ein Abtrieb- /Antriebmodul unabhängig von der Ausgestaltung der abgasseitigen Baukastenmodule. Vorzugsweise ist als abgasseitiges Baukastenmodul das Abgasabströmgehäuse unabhängig von der Ausgestaltung der übrigen abgasseitigen Baukastenmodule. Hiermit kann die Anzahl der identischen Baukastenmodule des Baukastensystems weiter erhöht werden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine erste Aufladungseinrichtung in Baukastenbauform;
- Fig. 2: eine zweite Aufladungseinrichtung in Baukastenbauform;
- Fig. 3: eine dritte Aufladungseinrichtung in Baukastenbauform;
- Fig. 4: eine vierte Aufladungseinrichtung in Baukastenbauform;
- Fig. 5: eine fünfte Aufladungseinrichtung in Baukastenbauform;
- Fig. 6: eine sechste Aufladungseinrichtung in Baukastenbauform;
- Fig. 7: eine siebte Aufladungseinrichtung in Baukastenbauform;
- Fig. 8: eine achte Aufladungseinrichtung in Baukastenbauform;
- Fig. 9: eine neunte Aufladungseinrichtung in Baukastenbauform;
- Fig. 10: eine zehnte Aufladungseinrichtung in Baukastenbauform;
- Fig. 11: eine elfte Aufladungseinrichtung in Baukastenbauform;
- Fig. 12: eine zwölfte Aufladungseinrichtung in Baukastenbauform;
- Fig. 13: eine weitere Aufladungseinrichtung in Baukastenbauform;
- Fig. 14:: ein Diagramm zur weiteren Verdeutlichung des Baukastensystems.

Die Erfindung betrifft eine mehrstufige Aufladungseinrichtung in Baukastenform, bei welcher unabhängig von der konkreten Ausführung der Aufladungseinrichtung eine Vielzahl von Kernkomponenten derselben im Sinne eines morphologischen Baukastensystems unverändert oder mit minimalen Anpassungen genutzt werden können.

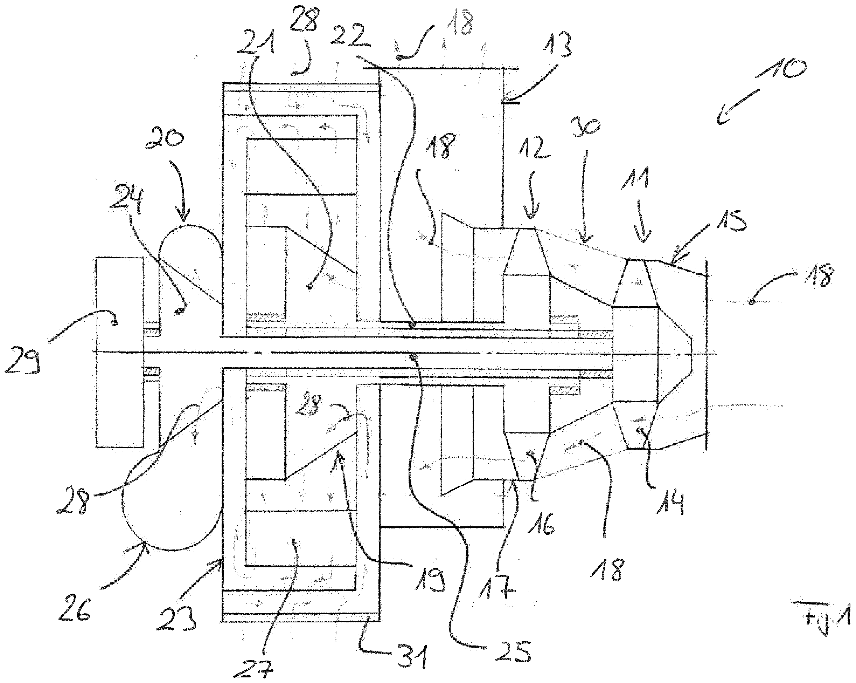

Fig. 1 zeigt eine erste unter Verwendung des erfindungsgemäßen Baukastensystems gebildete, mehrstufige Aufladungseinrichtung 10 für eine Brennkraftmaschine.

Die Aufladungseinrichtung 10 verfügt als abgasseitige Baugruppen über eine Hochdruckturbine 11, eine Niederdruckturbine 12 sowie über ein Abgasabströmgehäuse 13. Die Hochdruckturbine 11 umfasst einen Hochdruckturbinenrotor 14 und ein Hochdruckturbinengehäuse 15. Die Niederdruckturbine 12 umfasst einen Niederdruckturbinenrotor 16 und ein Niederdruckturbinengehäuse 17.

Gemäß Fig. 1 gelangt Abgas 18, welches eine Brennkraftmaschine verlässt, zunächst in den Bereich der Hochdruckturbine 11, um dort zumindest teilweise entspannt zu werden. Anschließend gelangt das Abgas in den Bereich der Niederdruckturbine 12, um dort weiter entspannt zu werden. Im Anschluss hieran gelangt das Abgas in den Bereich des Abgasabströmgehäuses 13, um von der Aufladungseinrichtung 10 abgeführt zu werden.

Als ladeluftseitige Baugruppen verfügt die Aufladungseinrichtung 10 der Fig. 1 über einen Niederdruckverdichter 19 und einen Hochdruckverdichter 20. Der Niederdruckverdichter 19 verfügt über einen Niederdruckverdichterrotor 21, der mit dem Niederdruckturbinenrotor 16 über eine niederdruckseitige Welle 22 gekoppelt ist. Ferner verfügt der Niederdruckverdichter 19 über ein Niederdruckverdichtergehäuse 23, welches über einen Schalldämpfer 31 zu verdichtende Ladeluft ansaugt. Der Hochdruckverdichter 20 verfügt über einen Hochdruckverdichterrotor 24, der mit dem Hochdruckturbinenrotor 14 über eine hochdruckseitige Welle 25 gekoppelt ist. Gemäß Fig. 1 ist die niederdruckseitige Welle 22 als Hohlwelle ausgeführt, welche die hochdruckseitige Welle 25 zumindest abschnittsweise konzentrisch umgibt. Ferner verfügt der Hochdruckverdichter 20 über ein Hochdruckverdichtergehäuse 26. Als weitere ladeluftseitige Baugruppe verfügt die Aufladungseinrichtung 10 der Fig. 1 über einen Ladeluftkühler 27, der in Strömungsrichtung der Ladeluft zwischen den Niederdruckverdichter 19 und den Hochdruckverdichter 20 geschaltet ist und vom Niederdruckverdichtergehäuse 23 aufgenommen ist.

Zu verdichtende Luft 28 wird über den Schalldämpfer 31 angesaugt und zunächst im Niederdruckverdichter 19 und anschließend im Hochdruckverdichter 20 verdichtet, wobei zwischen dem Niederdruckverdichter 19 und dem Hochdruckverdichter 20 die Ladeluft 28 im Ladeluftkühler 27 gekühlt wird. Ausgehend vom Hochdruckverdichter 20 ist die verdichtete Ladeluft 28 der Brennkraftmaschine zuführbar.

Als weitere Baugruppe verfügt die Aufladungseinrichtung 10 über ein Abtriebs-/Antriebsmodul 29, über welches entweder von der Aufladungseinrichtung 10 Leistung entnommen oder der Aufladungseinrichtung 10 Leistung zugeführt werden kann.

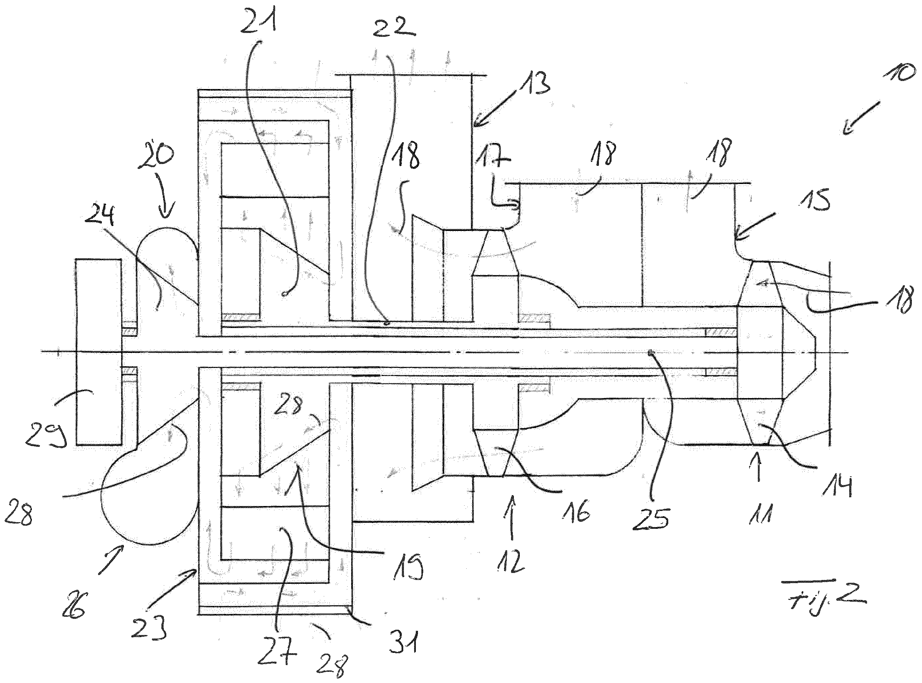

Die Aufladungseinrichtung 10 der Fig. 1 ist eine mehrstufige Aufladungseinrichtung in Baukastenform bzw. nach Baukastensystem zusammengesetzte mehrstufige Aufladungseinrichtung. Bei der erfindungsgemäßen mehrstufigen Aufladungseinrichtung in Baukastenform sind, wie nachfolgend unter weiterer Bezugnahme auf Fig. 2 bis 14 im Detail beschrieben wird, die ladeluftseitigen Baukastenmodule, nämlich zumindest der Hochdruckverdichter 20 mit dem Hochdruckverdichterrotor 24 und dem Hochdruckverdichtergehäuse 26, der Niederdruckverdichter 13 mit dem Niederdruckverdichterrotor 21 und dem Niederdruckverdichtergehäuse 23, und der zwischen den Niederdruckverdichter 19 und den Hochdruckverdichter 20 geschaltete Ladeluftkühler 27 sowie darüber hinaus der Schalldämpfer 31 unabhängig von der Ausgestaltung der abgasseitigen Baukastenmodule des Baukastensystems, wobei darüber hinaus auch das Abtriebs-/Antriebsmodul 29 unabhängig von der Ausgestaltung der abgasseitigen Baukastenmodule des erfindungsgemäßen Baukastensystems ist. Hochdruckverdichter 20 und Niederdruckverdichter 19 sind beim erfindungsgemäßen Baukastensystem vorzugsweise jeweils als Radialverdichter ausgeführt. Im Unterschied hierzu ist es jedoch auch möglich, einen dieser beiden Verdichter oder auch beide Verdichter als Axialverdichter auszuführen. Die Verwendung von Radialverdichtern als Hochdruckverdichter 20 und Niederdruckverdichter 19 ist jedoch bevorzugt.

Als abgasseitige Baukastenmodule sind die Hochdruckturbine 11 mit dem Hochdruckturbinenrotor 14 und dem Hochdruckturbinengehäuse 15 und die Niederdruckturbine 12 mit dem Niederdruckturbinenrotor 16 und dem Niederdruckgehäuse 17 abhängig davon, ob die Hochdruckturbine 11 als Radialturbine oder als Axialturbine, und ob die Niederdruckturbine 12 als Radialturbine oder als Axialturbine ausgeführt ist. Im Ausführungsbeispiel der Fig. 1 sind die Hochdruckturbine 11 und die Niederdruckturbine 12 jeweils als Axialturbine ausgeführt.

Weiterhin sind beim erfindungsgemäßen Baukastensystem als abgasseitige Baukastenmodule das Hochdruckturbinengehäuse 15 und das Niederdruckturbinengehäuse 17 abhängig davon, ob die Aufladungseinrichtung 10 als Aufladungseinrichtung ohne Abgasnachbehandlung zwischen Hochdruckturbine 11 und Niederdruckturbine 12 oder als Aufladungseinrichtung mit Abgasnachbehandlung zwischen der Hochdruckturbine 11 und der Niederdruckturbine 12 ausgebildet ist. Im Ausführungsbeispiel der Fig. 1 ist die Aufladungseinrichtung 10 als Aufladungseinrichtung ohne Abgasnachbehandlung zwischen der Hochdruckturbine 11 und der Niederdruckturbine 12 ausgebildet, sodass sich dann zwischen dem Hochdruckturbinengehäuse 15 und dem Niederdruckturbinengehäuse 17 ein Zwischengehäuse 30 erstreckt, welches der unmittelbaren Überführung des Abgases 18 ausgehend von der Hochdruckturbine 11 in die Niederdruckturbine 12 dient.

Als abgasseitiges Baukastenmodul ist das Abgasabströmgehäuse 13 unabhängig von der Ausgestaltung der übrigen abgasseitigen Baukastenmodule des Baukastensystems.

Fig. 2 zeigt eine zweite erfindungsgemäße Aufladungseinrichtung 10, die unter Verwendung des erfindungsgemäßen Baukastensystems zusammengesetzt ist, wobei sich die Aufladungseinrichtung 10 der Fig. 2 von der Aufladungseinrichtung 10 der Fig. 1 lediglich dadurch unterscheidet, dass es sich bei der Aufladungseinrichtung 10 der Fig. 2 um eine Aufladungseinrichtung mit Abgasnachbehandlung handelt, nämlich um eine Aufladungseinrichtung 10 mit externer Abgasnachbehandlung. Demnach kommen für die Aufladungseinrichtung 10 der Fig. 2 im Unterschied zur Aufladungseinrichtung 10 der Fig. 1 unterschiedlich ausgeprägte Turbinengehäuse 15, 17 zum Einsatz, nämlich ein Hochdruckturbinengehäuse 15, über welches das Abgas ausgehend von der Hochdruckturbine 11 der nicht gezeigten externen Abgasnachbehandlungseinrichtung zugeführt werden kann, und das Niederdruckturbinengehäuse 17, über welches Abgas 18 ausgehend von der nicht gezeigten externen Abgasnachbehandlung der Niederdruckturbine 12 zugeführt werden kann.

Wie Fig. 2 entnommen werden kann, unterscheidet sich beim Ausführungsbeispiel der Fig. 2 auch die hochdruckseitige Welle 25 von der hochdruckseitigen Welle 25 des Ausführungsbeispiels der Fig. 1, nämlich durch deren Länge. So ist demnach zumindest die Länge der hochdruckseitigen Welle 25, welche den Hochdruckturbinenrotor 14 mit dem Hochdruckverdichterrotor 24 koppelt, abhängig davon, ob die Aufladungseinrichtung 10 als Aufladungseinrichtung ohne Abgasnachbehandlung oder als Aufladungseinrichtung mit Abgasnachbehandlung ausgeführt ist.

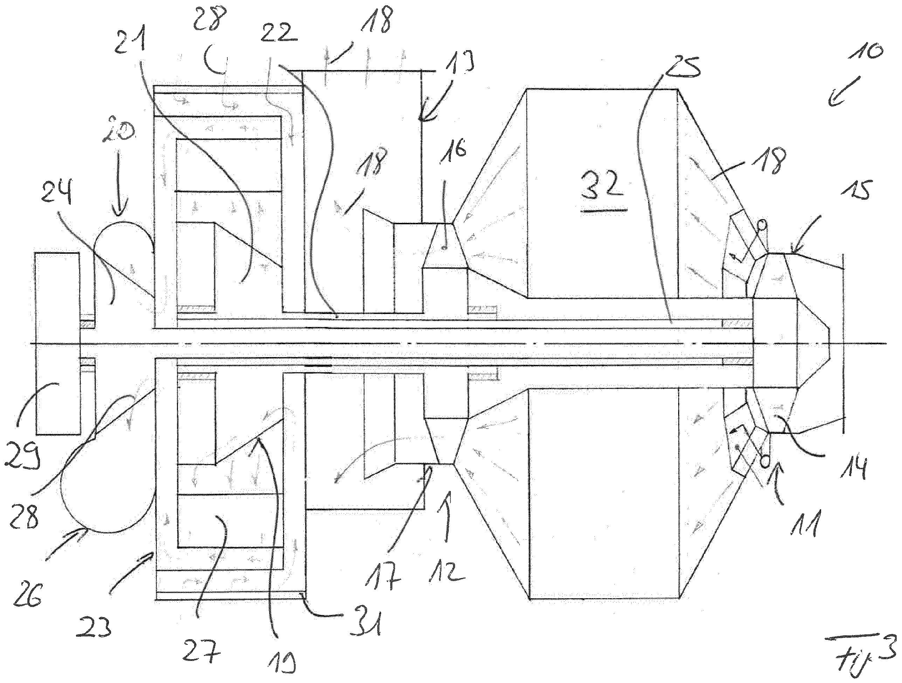

Fig. 3 zeigt ein Ausführungsbeispiel einer Aufladungseinrichtung 10, die sich von der Aufladungseinrichtung 10 der Fig. 2 dadurch unterscheidet, dass die Aufladungseinrichtung 10 eine interne Abgasnachbehandlung 32 aufweist. So kann Fig. 3 entnommen werden, dass sich die Aufladungseinrichtung der Fig. 3 von der Aufladungseinrichtung der Fig. 2 hinsichtlich ihrer Turbinengehäuse 15, 17 unterscheidet, über welche in Fig. 3 das Abgas 18 über die interne Abgasnachbehandlungseinrichtung 32, die zwischen die Hochdruckturbine 11 und die Niederdruckturbine 12 geschaltet ist, geführt werden kann. Hinsichtlich aller weiteren Baugruppen stimmt das Ausführungsbeispiel der Fig. 3 mit dem Ausführungsbeispiel der Fig. 1 überein. Abhängig vom Platzbedarf der internen Abgasnachbehandlung 32 kann die Länge der hochdruckseitigen Welle 25 variieren.

Bei den Ausführungsbeispielen der Fig. 1 bis 3 sind demnach die beiden Turbinen 11 und 12 der Abgasnachbehandlungseinrichtungen 10 jeweils als Axialturbinen ausgeführt. Die Aufladungseinrichtungen 10 der Fig. 1 bis 3 verwenden eine Vielzahl gleicher Baukastenmodule, wobei sich die Aufladungseinrichtungen 10 der Fig. 1 bis 3 in erster Linie durch die zum Einsatz kommenden Turbinengehäuse 15 und 17 unterscheiden, nämlich abhängig davon, ob die jeweilige Aufladungseinrichtung mit oder ohne Abgasnachbehandlung zwischen Hochdruckturbine 11 und Niederdruckturbine 12 ausgeführt ist. Weiterhin unterscheidet sich abhängig von diesem Kriterium die Länge der hochdruckseitigen Welle 25, welche den Hochdruckturbinenrotor 14 mit dem Hochdruckverdichterrotor 24 koppelt.

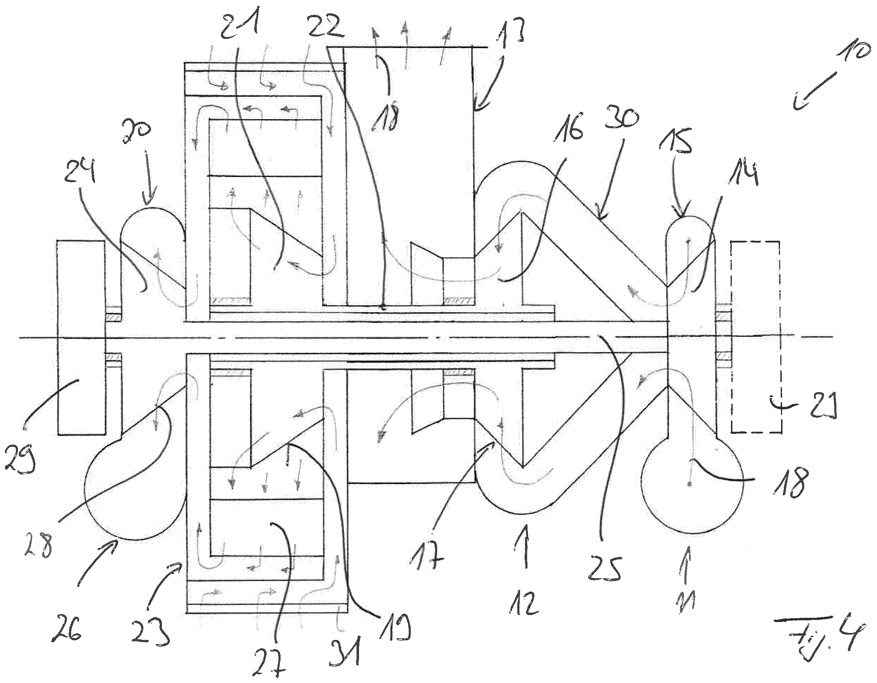

Fig. 4, 5, 6 und 7 zeigen jeweils wiederum mehrere erfindungsgemäße Aufladungseinrichtungen 10, die unter Verwendung des erfindungsgemäßen Baukastensystems zusammengesetzt sind, wobei sich die Abgasnachbehandlungseinrichtungen 10 der Fig. 4 bis 7 von den Aufladungseinrichtungen 10 der Fig. 1 bis 3 in erster Linie dadurch unterscheiden, dass in den Ausführungsbeispielen der Fig. 4 bis 7 beide Turbinen, also sowohl die Hochdruckturbine 11 als auch die Niederdruckturbine 12, als Radialturbinen ausgeführt sind.

Sämtliche ladeluftseitigen Baugruppen, also der Niederdruckverdichter 19 umfassend den Niederdruckverdichterrotor 21 und das Niederdruckverdichtergehäuse 23, der Hochdruckverdichter 20 umfassend den Hochdruckverdichterrotor 24 und das Hochdruckverdichtergehäuse 26, sowie der Ladeluftkühler 27 sind identisch, ebenso wie das Abgasabströmgehäuse 13.

Hingegen sind in den Ausführungsbeispielen der Fig. 4 bis 7 im Vergleich zu den Ausführungsbeispielen der Fig. 1 bis 3 die Hochdruckturbine 11 und die Niederdruckturbine 12 unterschiedlich, nämlich hinsichtlich ihrer Rotoren 14, 16 und ihrer Gehäuse 15, 17.

Die Bauform der Turbinenrotoren 14, 16 ist davon abhängig ist, dass es sich bei denselben um Radialturbinen handelt. Die Bauform der Turbinengehäuse 15, 17 ist weiterhin abhängig davon ist, ob die jeweilige Aufladungseinrichtung 10 ohne Abgasnachbehandlung, mit interner Abgasnachbehandlung oder mit externer Abgasnachbehandlung ausgeführt ist.

So zeigt Fig. 4 ein Ausführungsbeispiel einer Aufladungseinrichtung 10, bei welcher sowohl Hochdruckturbine 11 als auch Niederdruckturbine 12 als Radialturbinen ausgeführt sind, bei welcher jedoch keine Abgasnachbehandlung zwischen Hochdruckturbine 11 und Niederdruckturbine 12 vorhanden ist.

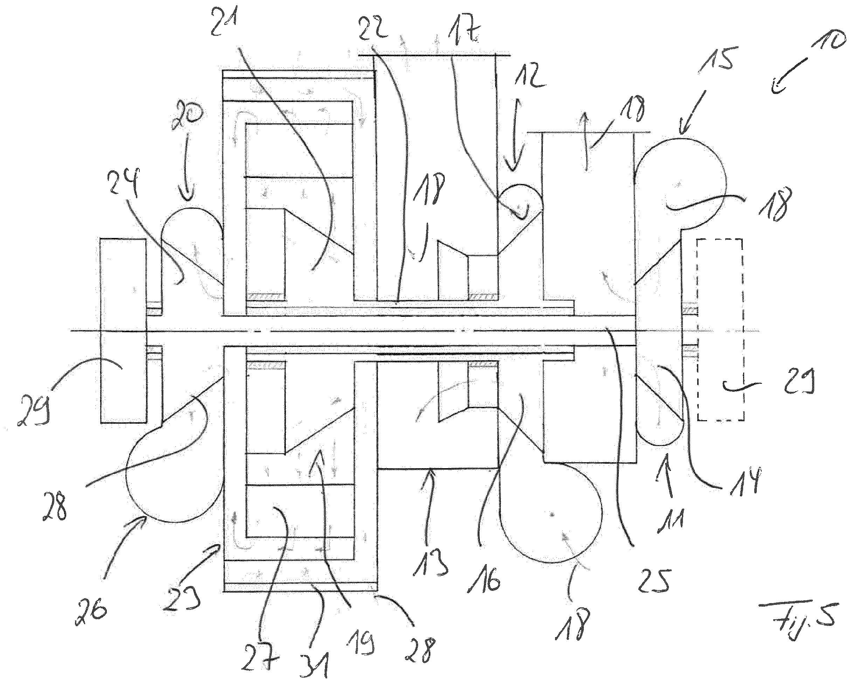

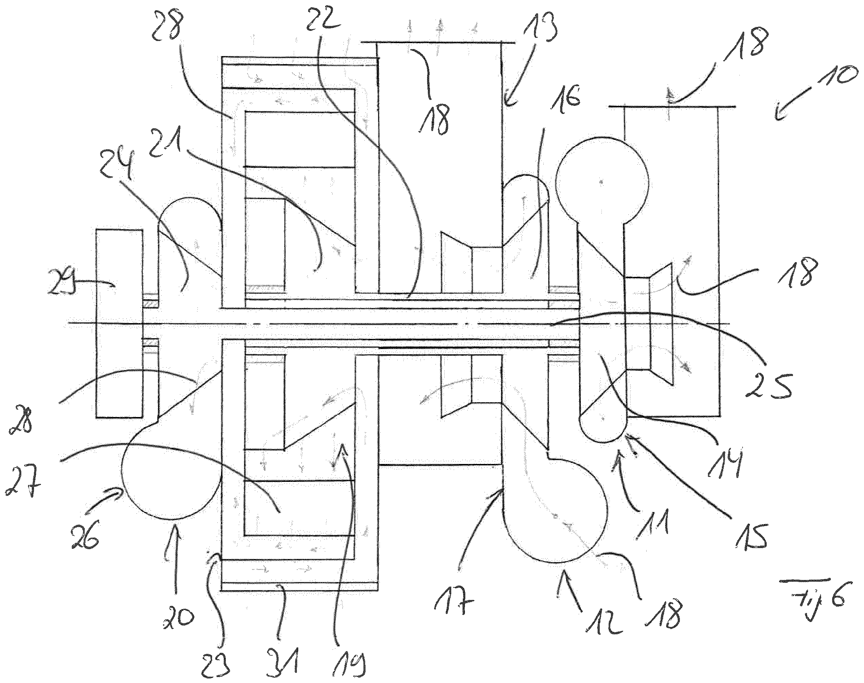

Fig. 5 und 6 zeigen jeweils Ausführungsbeispiele einer unter Verwendung des erfindungsgemäßen Baukastensystems zusammengesetzten Aufladungseinrichtungen 10, bei welcher Hochdruckturbine 11 und Niederdruckturbine 12 jeweils als Radialturbinen ausgeführt sind, und bei welchen die Turbinengehäuse 15, 17 der Turbinen 11 und 12 zum Anschluss einer externen Abgasnachbehandlungseinrichtung ausgebildet sind. Fig. 5 und 6 unterscheiden sich dabei hinsichtlich der Positionierung der Hochdruckturbine 11, wobei in Fig. 5 ein Abschnitt des Hochdruckturbinengehäuses 15, welches der Zuleitung des Abgases in Richtung auf die externe Nachbehandlungseinrichtung dient, zwischen den beiden Turbinenrotoren 14, 16 positioniert ist, wohingegen in Fig. 6 die Orientierung der Hochdruckturbine 11 um 180° gedreht ist, sodass dieser Abschnitt des Hochdruckturbinengehäuses 15 nicht zwischen den beiden Turbinenrotoren 14, 16 der beiden Radialturbinen 11, 12 angeordnet ist.

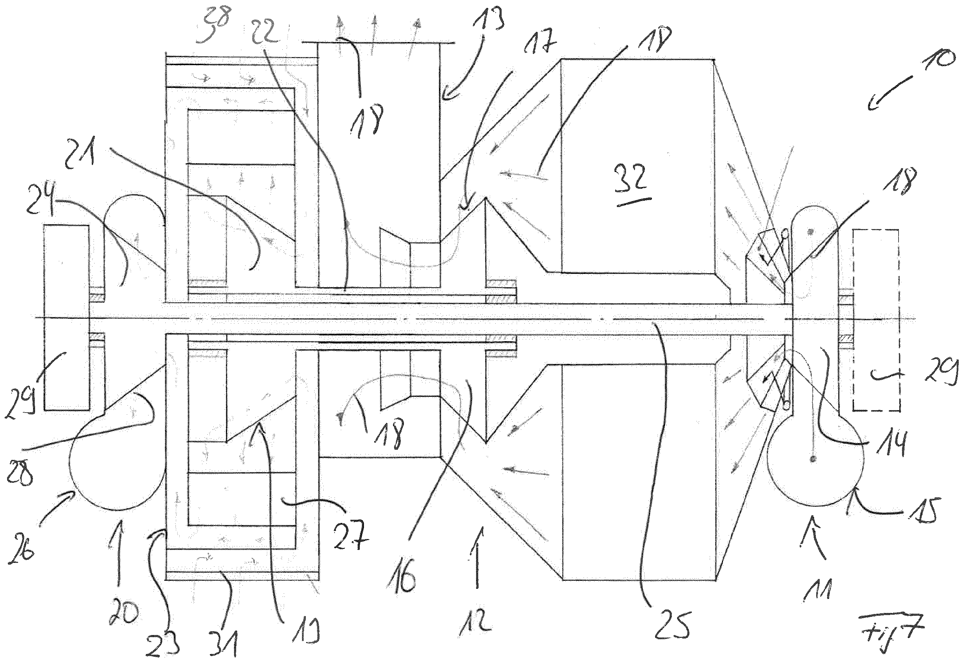

Fig. 7 zeigt ein Ausführungsbeispiel einer unter Verwendung des erfindungsgemäßen Baukastensystems zusammengesetzten Aufladungseinrichtung 10, bei welcher wiederum beide Turbinen 11, 12 als Radialturbinen ausgeführt sind, und die eine interne Abgasnachbehandlung 32 aufweist.

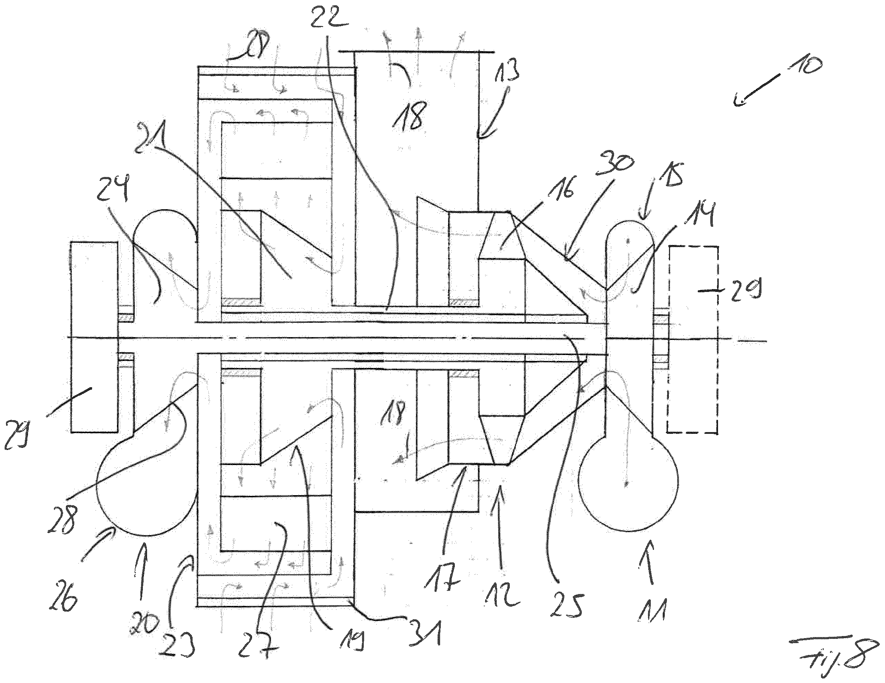

Besonders bevorzugte Ausführungsbeispiele von unter Verwendung des erfindungsgemäßen Baukastensystems zusammengesetzten Aufladungseinrichtungen 10 zeigen Fig. 8 bis 10, wobei in Fig. 8 bis 10 die Hochdruckturbine 11 als Radialturbine und die Niederdruckturbine 12 als Axialturbine ausgeführt ist. Die ladeluftseitigen Baukastenmodule, nämlich der Hochdruckverdichter 20 mit dem Hochdruckverdichterrotor 24 und dem Hochdruckverdichtergehäuse 26, der Niederdruckverdichter 19 mit dem Niederdruckverdichtergehäuse 23 und dem Niederdruckverdichterrotor 21, der Ladeluftkühler 27 sowie darüber hinaus als abgasseitige Baugruppe das Abgasabströmgehäuse 13 sind wiederum unabhängig von den abgasseitigen Baukastenmodulen bzw. den übrigen abgasseitigen Baukastenmodulen, nämlich unabhängig davon, ob es sich bei den Turbinen um Axialturbinen und Radialturbinen handelt, sowie unabhängig davon, ob die Aufladungseinrichtung 10 mit oder ohne Abgasnachbehandlung ausgeführt ist.

Wie bereits ausgeführt, ist in den Ausführungsbeispielen der Fig. 8 bis 10 die Hochdruckturbine 11 jeweils als Radialturbine und die Niederdruckturbine 12 jeweils als Axialturbine ausgeführt, wobei die Rotoren 14, 16 sowie die Gehäuse 15, 17 dieser Turbinen 11, 12 abhängig davon sind, ob die jeweilige Turbine als Axialturbine oder Radialturbine ausgeführt ist.

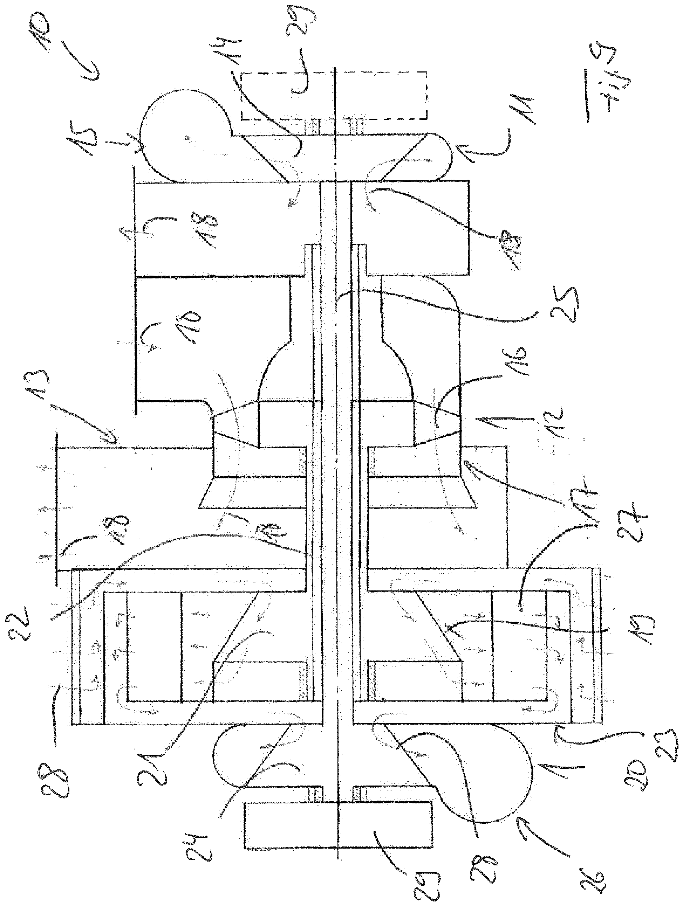

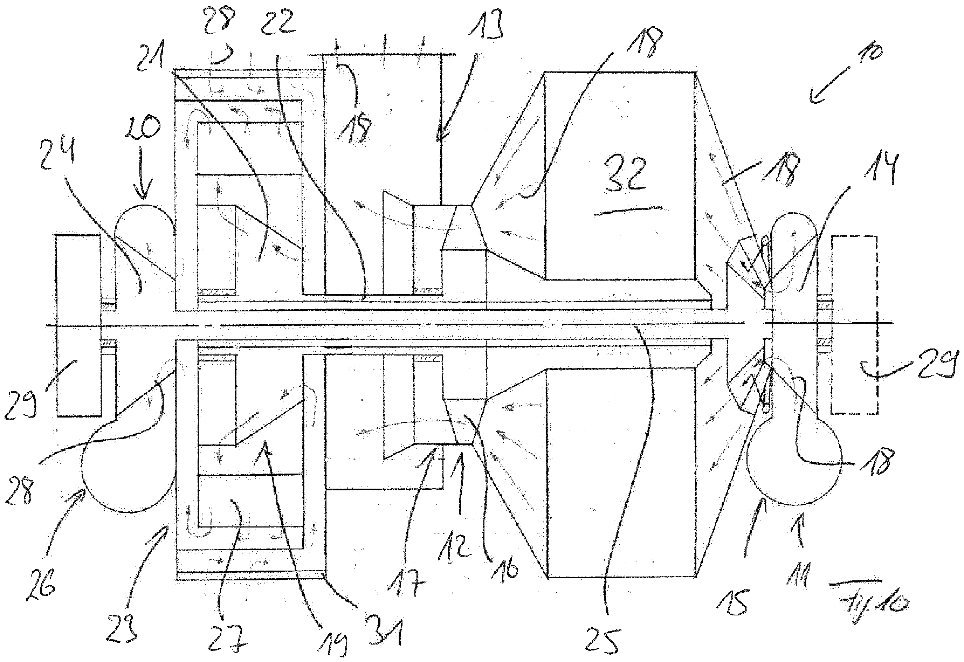

Fig. 8 bis 10 kann weiterhin entnommen werden, dass die Gehäuse 15, 17 der Turbinen 11, 12 abhängig davon sind, ob die Aufladungseinrichtung 10 ohne Abgasnachbehandlung, mit interner Abgasnachbehandlung 32 oder mit externer Abgasnachbehandlung zwischen der Hochdruckturbine 11 und der Niederdruckturbine 12 ausgeführt ist, wobei das Ausführungsbeispiel der Fig. 8 eine Aufladungseinrichtung 10 ohne Abgasnachbehandlung zwischen Hochdruckturbine 11 und Niederdruckturbine 12 zeigt, wobei das Ausführungsbeispiel der Fig. 9 eine Aufladungseinrichtung 10 mit externer Abgasnachbehandlung zwischen Hochdruckturbine 11 und Niederdruckturbine 12 zeigt, und wobei das Ausführungsbeispiel der Fig. 10 eine Aufladungseinrichtung 10 mit interner Abgasnachbehandlung 32 zwischen Hochdruckturbine 11 und Niederdruckturbine 12 zeigt.

Ferner sind den Ausführungsbeispielen der Fig. 4 bis 10 in gestrichelter Linienführung unterschiedliche Positionierungsmöglichkeiten für die jeweiligen Abtriebs-/Antriebsmodule 29 der jeweiligen Aufladungseinrichtungen 10 gezeigt, die jeweils unabhängig von den abgasseitigen Baukastenmodulen sind.

In durchgezogener Linienführung ist eine Anordnung des jeweiligen Abtriebs-/Antriebsmoduls 29 benachbart zum Hochdruckverdichter 20 der jeweiligen Aufladungseinrichtung 10 und in gestrichelter Linienführung ist eine Anordnung des jeweiligen Abtriebs-/Antriebsmoduls 29 benachbart zur Hochdruckturbine 11 der jeweiligen Aufladungseinrichtung 10 gezeigt.

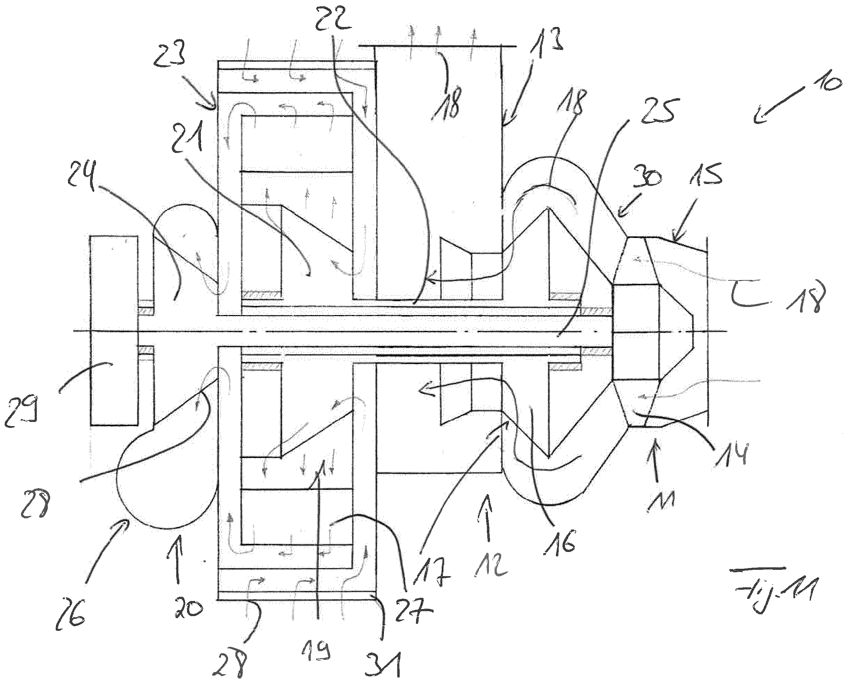

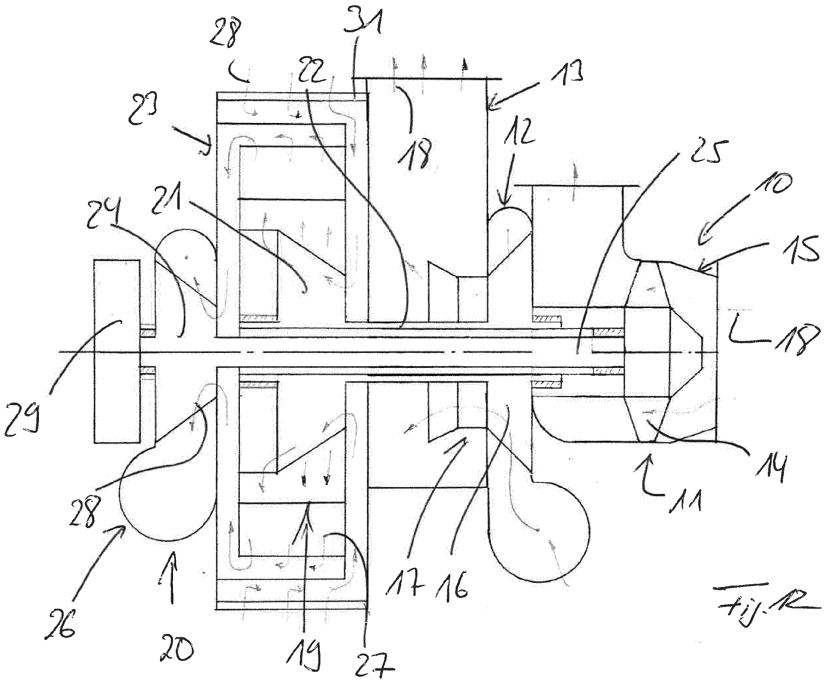

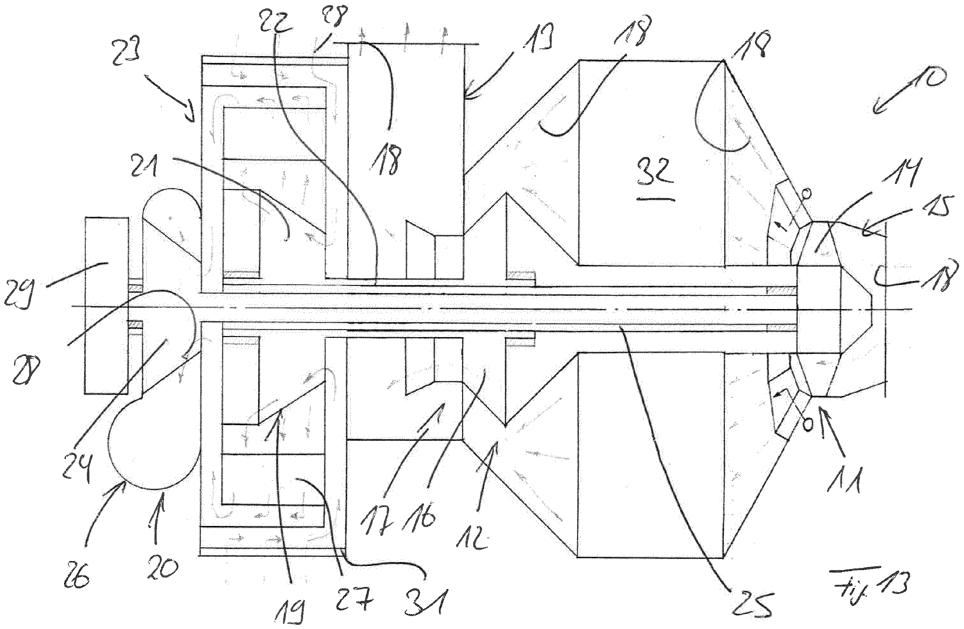

Fig. 11 bis 13 zeigen weitere Varianten erfindungsgemäßer Aufladungseinrichtungen 10, die unter Verwendung des erfindungsgemäßen Baukastensystems zusammengesetzt sind, wobei in den Fig. 11 bis 13 die Hochdruckturbine 11 als Axialturbine und die Niederdruckturbine 12 als Radialturbine ausgeführt ist, wobei in Fig. 11 keine Abgasnachbehandlung zwischen Hochdruckturbine 11 und Niederdruckturbine 12 vorgesehen ist, wobei in Fig. 12 eine externe Abgasnachbehandlung zwischen Hochdruckturbine 11 und Niederdruckturbine 12 vorgesehen ist, und wobei in Fig. 13 eine interne Abgasnachbehandlung 32 zwischen Hochdruckturbine 11 und Niederdruckturbine 12 vorgesehen ist.

Aus den Ausführungsbeispielen der Fig. 1 bis 13 folgt demnach unmittelbar, dass für sämtliche Aufladungseinrichtungen 10, die unter Verwendung des erfindungsgemäßen Baukastensystems zusammengesetzt sind, sämtliche ladeluftseitigen Baugruppen identisch sind, also der Niederdruckverdichter 19 mit dem Niederdruckverdichterrotor 21 und dem Niederdruckverdichtergehäuse 23, der Hochdruckverdichter 20 mit dem Hochdruckverdichterrotor 24 und dem Hochdruckverdichtergehäuse 26, der Ladeluftkühler 27 sowie der Schalldämpfer 31.

Ferner sind in allen Ausführungsbeispielen der Fig. 1 bis 13 einerseits das Abtriebs-/Antriebsmodul 29 sowie andererseits als abgasseitiges Baukastenmodul das Abgasabströmgehäuse 13 identisch.

Diese für alle Ausführungsbeispiele identischen Baukastenmodule des Baukastensystems sind unabhängig von der Ausgestaltung der übrigen abgasseitigen Baukastenmodule, und zwar unabhängig davon, ob im Bereich der Turbinen 11, 12 Axialturbinen und/oder Radialturbinen zum Einsatz kommen, sowie unabhängig davon, ob die Aufladungseinrichtung 10 als Aufladungseinrichtung 10 ohne Abgasnachbehandlung zwischen den Turbinen 11, 12 oder als Aufladungseinrichtung mit externer oder interner Abgasnachbehandlung zwischen den Turbinen 11, 12 ausgebildet ist.

Die abgasseitigen Baukastenmodule Hochdruckturbine 11 und Niederdruckturbine 12 sind mit ihren statorseitigen bzw. gehäuseseitigen Elementen und ihren rotorseitigen Elementen abhängig davon, ob die jeweilige Turbine 11, 12 als Radialturbine oder Axialturbine ausgeführt ist. Die gehäuseseitigen Elemente der Turbinen 11, 12 sind ferner abhängig davon, ob und falls ja welche Abgasnachbehandlung an der jeweiligen Aufladungseinrichtung 10 zum Einsatz kommt.

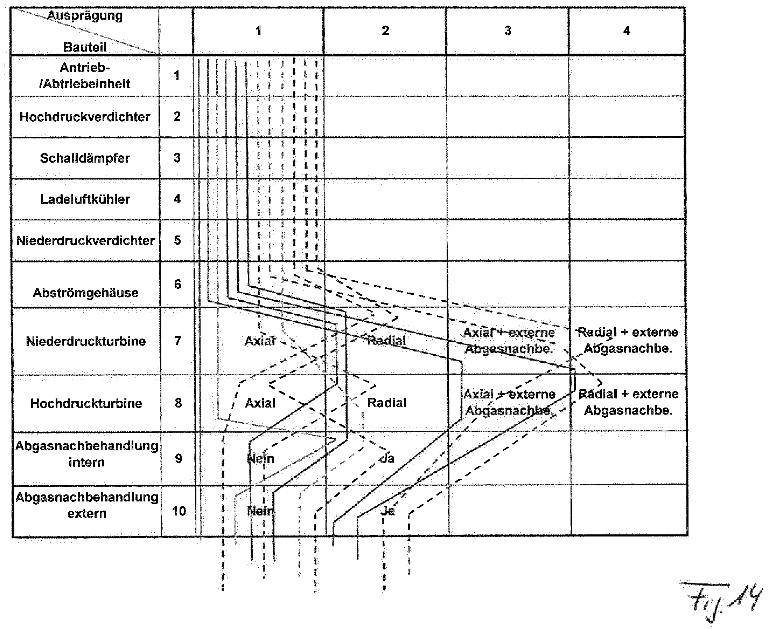

Diese Details folgen auch aus dem Diagramm der Fig. 14, wobei bei den Zeilen 1 bis 6 diejenigen Baukastenmodule aufgelistet sind, die über alle Ausführungsvarianten der Aufladungseinrichtung 10 identisch sind. In den Zeilen 7 bis 10 sind die abgasseitigen Baukastenmodule aufgelistet, die abhängig von der konkreten Ausführung der Aufladungseinrichtung 10 sind, also abhängig davon, ob die Turbinen 11, 12 als Axialturbinen und/oder Radialturbinen ausgeführt sind, sowie unabhängig davon, ob die Aufladungseinrichtung 10 als Aufladungseinrichtung ohne Abgasnachbehandlung zwischen den Turbinen 11, 12 oder als Aufladungseinrichtung mit externer oder interner Abgasnachbehandlung ausgeführt ist. Die Abgasnachbehandlung als solche ist unabhängig davon, ob die Turbinen 11, 12 als Axialturbinen und/oder Radialturbinen ausgeführt sind.

## Patentansprüche

1. Mehrstufige Aufladungseinrichtung in Baukastenform, die als abgasseitige Baugruppe zumindest eine Hochdruckturbine (11) mit einem Hochdruckturbinenrotor (14) und einem Hochdruckturbinengehäuse (15), eine Niederdruckturbine (12) mit einem Niederdruckturbinenrotor (16) und einem Niederdruckturbinengehäuse (17) und ein Abgasabströmgehäuse (13) aufweisen, und die als ladeluftseitige Baugruppe zumindest einen Hochdruckverdichter (20) mit einem Hochdruckverdichterrotor (24) und einem Hochdruckverdichtergehäuse (26), einen Niederdruckverdichter (19) mit einem Niederdruckverdichterrotor (21) und einem Niederdruckverdichtergehäuse (23) und einen zwischen den Niederdruckverdichter (19) und den Hochdruckverdichter (20) geschalteten Ladeluftkühler (27) aufweisen, wobei die Aufladungseinrichtung aus mehreren Baukastenmodulen eines Baukastensystems zusammensetzbar ist, nämlich derart, dass:
die ladeluftseitigen Baukastenmodule, nämlich zumindest der Hochdruckverdichter (20) mit dem Hochdruckverdichterrotor (24) und dem Hochdruckverdichtergehäuse (26), der Niederdruckverdichter (19) mit dem Niederdruckverdichterrotor (21) und dem Niederdruckverdichtergehäuse (23), und der zwischen den Niederdruckverdichter (19) und den Hochdruckverdichter (20) geschaltete Ladeluftkühler (27) unabhängig davon sind, ob die Hochdruckturbine als Radialturbine oder als Axialturbine und ob die Niederdruckturbine als Radialturbine oder als Axialturbine ausgeführt ist, und davon, ob die Aufladungseinrichtung ohne Abgasnachbehandlung oder mit Abgasnachbehandlung zwischen der Hochdruckturbine und der Niederdruckturbine ausgebildet ist;
als abgasseitige Baukastenmodule die Hochdruckturbine (11) mit dem Hochdruckturbinenrotor (14) und dem Hochdruckturbinengehäuse (15) und die Niederdruckturbine (12) mit dem Niederdruckturbinenrotor (16) und dem Niederdruckturbinengehäuse (17) abhängig davon sind, ob die Hochdruckturbine (11) als Radialturbine oder als Axialturbine und ob die Niederdruckturbine (12) als Radialturbine oder als Axialturbine ausgeführt ist;
als abgasseitige Baukastenmodule das Hochdruckturbinengehäuse (15) und das Niederdruckturbinengehäuse (17) abhängig davon sind, ob die Aufladungseinrichtung ohne Abgasnachbehandlung oder mit Abgasnachbehandlung zwischen der Hochdruckturbine (11) und der Niederdruckturbine (12) ausgebildet ist.

2. Aufladungseinrichtung nach Anspruch 1, **dadurch gekennzeichnet, dass** als abgasseitige Baukastenmodule das Hochdruckturbinengehäuse (15) und das Niederdruckturbinengehäuse (17) abhängig davon sind, ob die Aufladungseinrichtung mit einer externen Abgasnachbehandlung oder mit einer internen Abgasnachbehandlung zwischen der Hochdruckturbine (11) und der Niederdruckturbine (12) ausgebildet ist.

3. Aufladungseinrichtung nach Anspruch 1 oder 2, **dadurch gekennzeichnet, dass** der Hochdruckverdichterrotor (24) mit dem Hochdruckturbinenrotor (14) über eine hochdruckseitige Welle (25) und der Niederdruckverdichterrotor (21) mit dem Niederdruckturbinenrotor (16) über eine niederdruckseitige Welle (22) gekoppelt ist, wobei die hochdruckseitige Welle (25) zumindest abschnittsweise von der als Hohlwelle ausgebildeten, niederdruckseitigen Welle (22) konzentrisch umschlossen ist, und wobei die Länge der hochdruckseitigen Welle (25) abhängig davon ist, ob die Aufladungseinrichtung ohne Abgasnachbehandlung oder mit Abgasnachbehandlung zwischen der Hochdruckturbine (11) und der Niederdruckturbine (12) ausgebildet ist.

4. Aufladungseinrichtung nach Anspruch 3, **dadurch gekennzeichnet, dass** die Länge der hochdruckseitigen Welle (25) abhängig davon ist, ob die Aufladungseinrichtung mit einer externen Abgasnachbehandlung oder mit einer internen Abgasnachbehandlung zwischen der Hochdruckturbine (11) und der Niederdruckturbine (12) ausgebildet ist.

5. Aufladungseinrichtung nach einem der Ansprüche 1 bis 4, **dadurch gekennzeichnet, dass** das abgasseitige Baukastenmodul Hochdruckturbine (11) als Radialturbine und das abgasseitige Baukastenmodul Niederdruckturbine (12) als Axialturbine ausgeführt sind.

6. Aufladungseinrichtung nach einem der Ansprüche 1 bis 5, **dadurch gekennzeichnet, dass** als abgasseitiges Baukastenmodul das Abgasabströmgehäuse (13) unabhängig von der Ausgestaltung der übrigen abgasseitigen Baukastenmodule ist.

7. Aufladungseinrichtung nach einem der Ansprüche 1 bis 6, **dadurch gekennzeichnet, dass** als weiteres ladeluftseitiges Baukastenmodul ein Schalldämpfer (31) zur Ladeluftansaugung unabhängig von der Ausgestaltung der abgasseitigen Baukastenmodule ist.

8. Aufladungseinrichtung nach einem der Ansprüche 1 bis 7, **dadurch gekennzeichnet, dass** die ladeluftseitigen Baukastenmodule Hochdruckverdichter (20) und Niederdruckverdichter (19) jeweils als Radialverdichter ausgeführt sind.

9. Aufladungseinrichtung nach einem der Ansprüche 1 bis 8, **dadurch gekennzeichnet, dass** als weiteres Baukastenmodul ein Abtrieb- /Antriebmodul (29) unabhängig von der Ausgestaltung der abgasseitigen Baukastenmodule ist.

## Claims

1. A multi-stage supercharging device in modular form which, as exhaust-side assembly, comprises at least one high-pressure turbine (11) having a high-pressure turbine rotor (14) and a high-pressure turbine housing (15), a low-pressure turbine (12) with a low-pressure turbine rotor (16) and a low-pressure turbine housing (17) and an exhaust gas outflow housing (13), and which, as charge air-side assembly, comprises at least one high-pressure compressor (20) with a high-pressure compressor rotor (24) and a high-pressure compressor housing (26), a low-pressure compressor (19) with a low-pressure compressor rotor (21) and a low-pressure compressor housing (23) and a charge air cooler (27) connected between the low-pressure compressor (19) and the high-pressure compressor (20), wherein the supercharging device can be assembled from multiple modules of a modular system, namely in such a manner that:
the charge air-side modules, namely at least the high-pressure compressor (20) with the high-pressure compressor rotor (24) and the high-pressure compressor housing (26), the low-pressure compressor (19) with the low-pressure compressor rotor (21) and the low-pressure compressor housing (23) and the charge air cooler (27) connected between the low-pressure compressor (19) and the high-pressure compressor (20) are independent of whether the high-pressure turbine is embodied as a radial turbine or as an axial turbine and whether the low-pressure turbine is embodied as a radial turbine or as an axial turbine, and of whether the supercharging device is designed without exhaust gas after-treatment or with exhaust gas after-treatment between the high-pressure turbine and the low-pressure turbine;
as exhaust-side modules, the high-pressure turbine (11) with the high-pressure turbine rotor (14) and the high-pressure turbine housing (15) and the low-pressure turbine (12) with the low-pressure turbine rotor (16) and the low-pressure turbine housing (17) are dependent on whether the high-pressure turbine (11) is embodied as a radial turbine or as an axial turbine and whether the low-pressure turbine (12) is embodied as a radial turbine or as an axial turbine;
as exhaust-side modules, the high-pressure turbine housing (15) and the low-pressure turbine housing (17) are dependent on whether the supercharging device is designed without exhaust gas after-treatment or with exhaust gas after-treatment between the high-pressure turbine (11) and the low-pressure turbine (12).

2. The supercharging device according to Claim 1, **characterized in that** as exhaust-side modules the high-pressure turbine housing (15) and the low-pressure turbine housing (17) are dependent on whether the supercharging device is designed with an external exhaust gas after-treatment or with an internal exhaust gas after-treatment between the high-pressure turbine (11) and the low-pressure turbine (12).

3. The supercharging device according to Claim 1 or 2, **characterized in that** the high-pressure compressor rotor (24) is coupled to the high-pressure turbine rotor (14) via a high-pressure-side shaft (25) and the low-pressure compressor (21) is coupled to the low-pressure turbine rotor (16) via a low-pressure-side shaft (22), wherein the high-pressure-side shaft (25) is concentrically enclosed at least in sections by the low-pressure-side shaft (22) that is formed as a hollow shaft, and wherein the length of the high-pressure-side shaft (25) is dependent on whether the supercharging device is designed without exhaust gas after-treatment or with exhaust gas after-treatment between the high-pressure turbine (11) and the low-pressure turbine (12).

4. The supercharging device according to Claim 3, **characterized in that** the length of the high-pressure-side shaft (25) is dependent on whether the supercharging device is designed with an external exhaust gas after-treatment or with an internal exhaust gas after-treatment between the high-pressure turbine (11) and the low-pressure turbine (12).

5. The supercharging device according to any one of the Claims 1 to 4, **characterized in that** the exhaust-side module high-pressure turbine (11) is embodied as a radial turbine and the exhaust-side module low-pressure turbine (12) as an axial turbine.

6. The supercharging device according to any one of the Claims 1 to 5, **characterized in that** as exhaust-side module the exhaust gas outflow housing (13) is independent of the configuration of the remaining exhaust-side modules.

7. The supercharging device according to any one of the Claims 1 to 6, **characterized in that** as further charge air-side module a silencer (31) for the charge air intake is independent of the configuration of the exhaust-side modules.

8. The supercharging device according to any one of the Claims 1 to 7, **characterized in that** the charge air-side modules high-pressure compressor (20) and low-pressure compressor (19) are each embodied as radial compressor.

9. The supercharging device according to any one of the Claims 1 to 8, **characterized in that** as further module an output/drive module (29) is independent of the configuration of the exhaust-side modules.

## Revendications

1. Dispositif de suralimentation à plusieurs étages ayant une construction modulaire, qui en tant que module du côté des gaz d'échappement présente au moins une turbine à haute pression (11) avec un rotor de turbine à haute pression (14) et un carter de turbine à haute pression (15), une turbine à basse pression (12) comportant un rotor de turbine basse pression (16) et un carter de turbine à basse pression (17) et un carter d'évacuation des gaz d'échappement (13), et qui en tant que le module du côté de l'air de charge présente au moins un compresseur à haute pression (20) avec un rotor de compresseur à haute pression (24) et un carter de compresseur à haute pression (26), un compresseur à basse pression (19) avec un rotor de compresseur à basse pression (21) et un carter de compresseur à basse pression (23) et un refroidisseur d'air de charge (27) raccordé entre le compresseur de basse pression (19) et le compresseur de haute pression (20), dans lequel le dispositif de suralimentation est composé de plusieurs reconstructions modulaires d'un système modulaire, à savoir de telle sorte que :
la construction modulaire du côté de l'air de charge, à savoir au moins le compresseur de haute pression (20) avec le rotor de compresseur à haute pression (24) et le carter de compresseur à haute pression (26), le compresseur à basse pression (19) avec le rotor de compresseur à basse pression (21) et le carter de compresseur à basse pression (23), et le refroidisseur d'air de charge (27) branché entre le compresseur à basse pression (19) et le compresseur à haute pression (20), ne dépendent pas du fait que la turbine à haute précision est configurée comme une turbine radiale ou comme une turbine axiale et que la turbine à basse pression est configurée comme une turbine radiale ou une turbine axiale, et du fait que le dispositif de suralimentation est configuré sans post- traitement des gaz d'échappement ou avec post-traitement des gaz d'échappement entre la turbine à haute pression et la turbine à basse pression,
en tant que construction modulaire du côté des gaz d'échappement la turbine à haute pression (11) avec le rotor de turbine à haute pression (14) et le carter de turbine à haute pression (15) et la turbine à basse pression (12) avec le rotor de turbine à basse pression (16) et le carter de turbine à basse pression (17) dépendent du fait que la turbine à haute pression (11) est configurée comme une turbine radiale ou comme une turbine axiale ou que la turbine à basse pression (12) est configurée comme une turbine radiale ou comme une turbine axiale ;
en tant que construction modulaire du côté des gaz d'échappement le carter de turbine à haute pression (15) et le carter de turbine à basse pression (17) dépendent du fait que le dispositif de suralimentation est configuré sans post-traitement des gaz d'échappement ou avec post-traitement des gaz d'échappement entre la turbine à haute pression (11) et la turbine à basse pression (12).

2. Dispositif de suralimentation selon la revendication 1, **caractérisé en ce que** en tant que construction modulaire du côté des gaz d'échappement le carter de turbine à haute pression (15) et le carter de turbine à basse pression (17) dépendent du fait que le dispositif de suralimentation est configuré avec une unité de post-traitement des gaz d'échappement externe ou avec une unité de post-traitement des gaz d'échappement interne entre la turbine à haute pression (11) et la turbine à basse pression (12).

3. Dispositif de suralimentation selon la revendication 1 ou 2, **caractérisé en ce que** le rotor de compresseur à haute pression (24) est couplé avec le rotor de turbine à haute pression (14) par l'intermédiaire d'un arbre du côté à haute pression (25) et le rotor de compresseur à basse pression (21) est couplé avec le rotor de turbine à basse pression (16) par l'intermédiaire d'un arbre du côté à basse pression (22), dans lequel l'arbre du côté à haute pression (25) est entouré au moins par portions par l'arbre du côté à basse pression configuré comme un arbre creux (22), et dans lequel la longueur de l'arbre du côté à haute pression (25) dépend du fait que le dispositif de suralimentation est configurée sans unité de post-traitement des gaz d'échappement ou avec une unité de post-traitement des gaz d'échappement entre la turbine à haute pression (11) et la turbine à basse pression (12) .

4. Dispositif de suralimentation selon la revendication 3, **caractérisé en ce que** la longueur de l'arbre du côté à haute pression (25) dépend du fait que le dispositif de suralimentation est configuré avec une unité de post-traitement des gaz d'échappement externe ou avec une unité de post-traitement des gaz d'échappement interne entre la turbine à haute pression (11) et la turbine à basse pression (12).

5. Dispositif de suralimentation selon une des revendications 1 à 4, **caractérisé en ce que** la construction modulaire du côté des gaz d'échappement est conçue comme une turbine à haute pression (11) en tant que turbine radiale et comme une turbine à basse pression en tant que turbine axiale (12).

6. Dispositif de suralimentation selon une des revendications 1 à 5, **caractérisé en ce que** en tant que construction modulaire du côté des gaz d'échappement le carter d'évacuation des gaz d'échappement (13) est indépendant de la configuration du reste de la construction modulaire du côté des gaz d'échappement.

7. Dispositif de suralimentation selon une des revendications 1 à 6, **caractérisé en ce que** en tant que construction modulaire supplémentaire du côté de l'air de charge un dispositif d'insonorisation (31) par rapport à l'aspiration d'air de charge est indépendant de la configuration de la construction modulaire du côté des gaz d'échappement.

8. Dispositif de suralimentation selon une des revendications 1 à 7, **caractérisé en ce que** le compresseur à haute pression (20) et le compresseur à basse pression (19) du côté de la construction modulaire du côté de l'air de charge sont respectivement configurés comme de compresseurs radiaux.

9. Dispositif de suralimentation selon une des revendications 1 à 8, **caractérisé en ce que** en tant que construction modulaire supplémentaire un module d'entraînement/sortie (29) est indépendant de la configuration de la construction modulaire du côté des gaz d'échappement.
